Europäisches Patentamt

European Patent Office

Office européen des brevets

(19)

(11) Numéro de publication: **0 145 060**

**B1**

(12) **FASCICULE DE BREVET EUROPEEN**

(45) Date de publication du fascicule du brevet: **18.05.88**

(21) Numéro de dépôt: **84201644.6**

(22) Date de dépôt: **14.11.84**

(51) Int. Cl.⁴: **H 01 B 7/16, H 01 B 13/00**

(54) **Procédé de fabrication d'un câble blindé à isolant minéral.**

(30) Priorité: **21.11.83 FR 8318487**

(43) Date de publication de la demande:
**19.06.85 Bulletin 85/25**

(45) Mention de la délivrance du brevet:
**18.05.88 Bulletin 88/20**

(84) Etats contractants désignés:
**DE FR GB IT NL SE**

(56) Documents cités:
**EP-A-0 084 171**
**FR-A-2 518 752**
**US-A-2 794 062**
**US-A-2 942 223**

(73) Titulaire: **THERMOCOAX et Cie.**
**10 rue de la Passerelle**
**F-92150 Suresnes (FR)**
㊷ **FR**

(73) Titulaire: **N.V. Philips' Gloeilampenfabrieken**
**Groenewoudseweg 1**
**NL-5621 BA Eindhoven (NL)**
㊷ **DE GB IT NL SE**

(72) Inventeur: **Bailleul, Gilles**
**Société Civile S.P.I.D. 209 rue de l'Université**
**F-75007 Paris (FR)**
Inventeur: **Sannes, Tjerk**
**Société Civile S.P.I.D. 209 rue de l'Université**
**F-75007 Paris (FR)**

(74) Mandataire: **Landousy, Christian et al**
**Société Civile S.P.I.D. 209, Rue de l'Université**
**F-75007 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 145 060 B1

## Description

L'invention concerne un procédé de réalisation d'un câble blindé à isolant minéral, ce câble comprenant une gaine métallique cylindrique et un ou plusieurs conducteurs centraux de forme tubulaire, isolé(s) de la gaine par l'isolant minéral et les extrémités du câble étant fermées d'une façon étanche tout en laissant passer le(s) conducteur(s), ce procédé incluant les étapes de:

a) mise en place dans la gaine des conducteurs tubulaires et de l'isolant minéral, cet ensemble présentant des dimensions radiales 1 à 10 fois supérieures à celles du câble et de ses éléments terminés;

b) emplissage des conducteurs tubulaires au moyen d'un matériau à l'état pulvérulent dont les propriétés mécaniques leur permettent de résistor aux traitements mécaniques à des températures et pressions élevées nécessaires à la fabrication du câble;

c) traitement mécanique incluant le tréfilage ou le martelage du câble, alterné avec des recuits à température élevée T et des trempes, jusqu'à l'obtention des dimensions radiales recherchées pour le câble.

L'invention trouve son application dans la réalisation de câbles pour la connexion électrique de capteurs fermées (isolés de l'ambiance).

Un dispositif réalisé au moyen d'un tel procédé est connu du document US—A—2 942 223.

Ce document décrit une résistance chauffante comprenant un conducteur central creux, sauf en ses extrémités, donc ne servant pas de voie de passage, disposé dans une gaine tubulaire dont il est isolé par de la poudre compactée.

Ce document décrit aussi par ailleurs une résistance chauffante comprenant un conducteur central creux empli de poudre conpactée, et donc ne servant pas de voie de passage, disposé dans une gaine tubulaire dont il est isolé par de la poudre compactée.

Or, pour la connexion de capteurs fermés, il est jusqu'à ce jour connu, sous la dénomination "Thermocoax", un câble comprenant une gaine métallique cylindrique et un ou plusieurs conducteurs centraux isolés par un isolant minéral. Un isolant minéral approprié est par exemple l'oxyde de magnésium ou l'oxyde d'aluminium, à l'état pulvérulent fortement comprimé. Les extrémités du câble sont fermées par un bouchon empêchant l'infiltration d'humidité, tout en laissant passer le conducteur.

D'une façon générale, la gaine métallique est en acier inoxydable ou en alliage nickel. Elle assure l'étanchéité désirable au gaz et à l'humidité, une bonne tenue mécanique et fournit une protection du conducteur central contre des influences chimiques extérieures.

Le ou les conducteurs centraux est/sont assez souvent de même nature que la gaine, ce qui confère au câble de meilleures propriétés mécaniques. Ce ou ces conducteurs peut/peuvent cependant être en cuivre par exemple lorsqu'une meilleure conductivité électrique est recherchée. Dans ce cas, le câble blindé ne peut subir des températures supérieures à 800°C sans altération de ses propriétés.

Les câbles blindés à isolant minéral servant à assurer la connexion électrique entre un capteur et un appareil de mesure dans une ambiance, qui interdit l'emploi d'isolant organique. Un grand nombre d'installations fonctionnant à haute température, ou sous forte pression, ou sous vide, ou encore sous radiation nucléaire, sont surveillées par des capteurs étanches. Ces capteurs peuvent être des capteurs de pression, de vibration, de déformation, ou de particules ionisantes. La connexion électrique de ces capteurs peut donc être réalisée à l'aide d'un câble blindé à isolant minéral, à condition que ces câbles soient reliés aux capteurs de manière étanche.

Toutefois, une telle application fait apparaître certains inconvénients en pratique. En effet, pour une installation fonctionnant à température élevée, la gaz contenu dans le capteur, tout comme le gaz contenu dans le câble de connexion augmentent en pression. Si ce câble sert de connexion à un capteur de pression ou à une jauge de contrainte capacitive, par exemple, il apparaît des écarts dans le mesures.

On pourrait penser une la perméabilité du "lit" de poudre isolant, qui existe entre le conducteur central et la gaine métallique est suffisante pour absorber ce surplus de pression. En fait, il n'en est rien pour deux raisons.

La première raison est que le câble blindé est, comme il a été mentionné ci-dessus, fermé à chacune de ses extrémités de façon étanche. En effet, il faut interposer une barrière entre l'isolant minéral pulvérulent, qui est hygroscopique et l'humidité de l'air ambiant pour conserver un isolement électrique convenable entre le conducteur central et la gaine.

La seconde raison est que la perméabilité de l'isolant, bien que ce dernier soit pulvérulent, est très faible, et que les longueurs de câble utilisées, qui peuvent atteindre 50 mètres, sont trop grandes pour permettre un écoulement du gaz indésirable dans un temps relativement court.

La présente invention vise à pallier ces inconvénients en proposant un nouveau procédé de réalisation d'un câble blindé à isolant minéral, dont les conducteurs centraux sont tubulaires. Un tel câble peut être obtenu au moyen du procédé décrit dans le préambule, selon lequel une ébauche d'un câble d'un diamètre supérieur au diamètre du câble définitif est soumise à un traitement mécanique, lors duquel la longueur du câble est soumis périodiquement à un traitement thermique de restauration. Le traitement mécanique peut être constitué par un procédé de tréfilage, de laminage ou de martelage. Par suite du traitement, le diamètre est réduit d'un facteur 10. Ces diverses méthodes de traitement sont décrites par exemple dans le brevet FR—A—2 518 752.

Au cours de la réduction du diamètre de l'ébauche par l'une de ces méthodes, le métal composant le conducteur central et la gaine est écroui et divient mécaniquement résistant au traitement qu'il subit. Afin de poursuivre le traitement mécanique choisi jusqu'à l'obtention du diamètre final, il est nécessaire de pratiquer périodiquement, pendant ce traitement mécanique, un traitement thermique de restauration métallurgique.

Toutefois, suivant les matériaux constituant le conducteur central et la gaine, ce traitement thermique (processus de recuit) est différent. Ainsi, pour des matériaux tels que l'acier inoxydale ou des alliages de nickel — matériaux qui sont les plus utilisés — le traitement thermique consiste dans une hypertrempe à 1000°C. Pour d'autres matériaux, tels que l'aluminium, le cuivre ou le titane, la température de recuit sera plus faible et pourra être comprise entre 300 et 700°C par exemple.

La susdite méthode connue présente l'inconvenient que le conducteur central creux est aplati et l'ouverture axiale de cette ouverture centrale se trouve bouchée partiellement ou totalement.

Or il importe que la cavité soit parfaite sur toute la longueur du câble.

L'invention fournit un procédé qui ne présente pas le susdit inconvénient.

Conformément à l'invention, ce but est atteint à l'aide d'un procédé tel que décrit dans le préambule, caractérisé en ce que le matériau d'emplissage des conducteurs tubulaires est durant les traitements mécaniques de fabrication du câble, en un état choisi parmi l'état solide ou l'état liquide, les extrémités des conducteurs étant dans ce dernier cas obstruées durant les traitements mécaniques, et en ce que le matériau d'emplissage des conducteurs est en outre choisi parmi les matériaux qui présentent les propriétés physiques appropriées pour permettre à la suite de l'étape c), l'étape: d) libération éventuelle des extrémités des conducteurs et élimination du matériau d'emplissage, sur toute la longueur des conducteurs par un opération choisie en fonction de ce matériau parmi le lavage, la dissolution, la fusion, la sublimation à une température supérieure à T.

Dans ces conditions, les gaz accumulés dans le capteur, produisant des effets indésirables sous l'effet de conditions de température et donc de pression, peuvent être éliminés par le conduit formé par l'intérieur du conducteur central de façon que le fonctionnement du capteur ne soit pas perturbé par ces conditions.

La description ci-après, en se référant aux dessins annexés, le tout donné à titre d'exemple non limitatif, fera bien comprendre le resultat de l'invention.

La figure la représente en coupe longitudinale un câble obtenu conformement à l'invention, présentant un seul conducteur central.

La figure 1b est une coupe transversale du câble selon la figure 1a.

La figure 1c est une coupe transversale d'un câble à trois conducteurs centraux.

La figure 2a est une coupe longitudinale d'un câble selon la présente invention avant la réduction de son diamètre et

La figure 2b est une coupe transversale du câble selon la figure 2a.

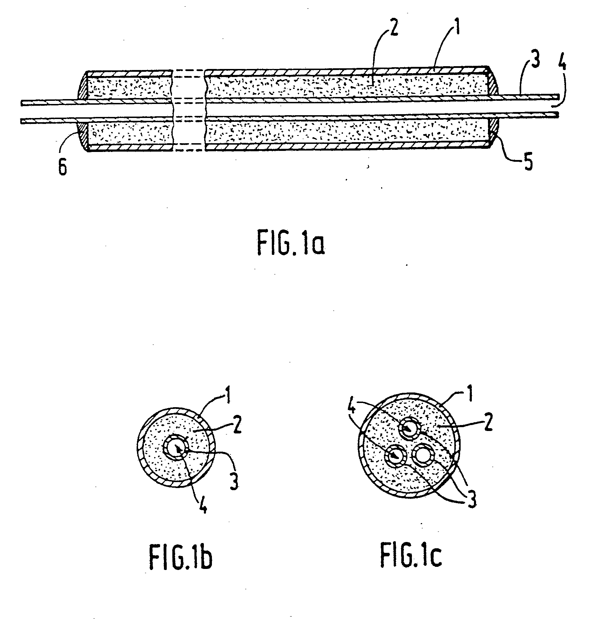

Comme le représentent les figures 1a et 1b, le câble obtenue conformement à la présente invention comprend une gaine cylindrique métallique 1, réalisée en acier inoxydable ou un alliage de nickel par exemple. De plus, le câble comporte un conducteur central cylindrique creux 3, muni d'un conduit axial 4. D'une façon générale, le conducteur central creux est réalisé, mais non nécessairement, avec le métal de la gaine. L'intervalle compris entre la gaine et le conducteur central 3 est rempli d'un isolant minéral 2 du genre magnésie ou alumine en poudre. Aux extrémités du câble sont prévus des bouchons d'étanchéité 5 et 6 laissant passer le conducteur central 3.

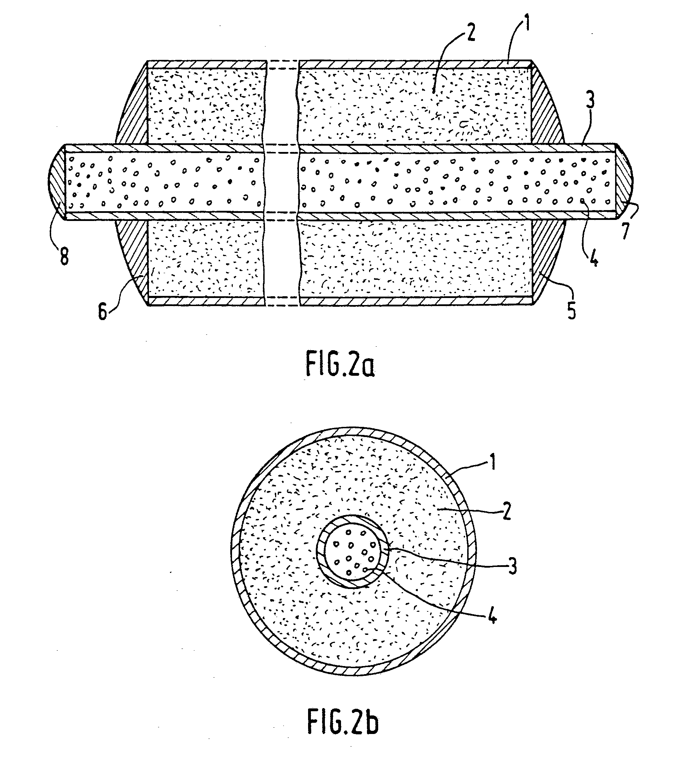

Pour la réalisation du câble on part d'une ébauche de 0,5 à 3 cm de diamètre représenté sur les figures 2a et 2b. Le diamètre doit être réduit jusqu'à 1 à 3 mm. A cet effet, le conduit 4 du conducteur central 3 est rempli de matériau pouvant résistor aux opérations de tréfilage, de liminage ou de martelage tout comme aux opérations de recuit à fortes températures. Un matériau approprié est le métasilicate de sodium. Ce produit se présente sous la forme d'une poudre dont le point de fusion est de 1088°C. Ainsi lors des opérations mécaniques et du recuit, jusqu'au maximum de 1000°C, le conduit 4 n'est pas écrasé ou bouché. Etant donné la température de recuit élevée, le métasilicate de sodium convient surtout pour la réalisation de câbles avec des métaux nécessitant une hypertrempe, tels que de l'acier inoxydable ou des alliages de nickel.

Finalement, le métasilicate de sodium est dissous dans de l'eau et ainsi sorti du conduit creux. A cet effet, le câble peut être simplement immergé dans l'eau ou de l'eau peut être injectée dans le conduit.

Selon une autre méthode, le conduit axial 4 peut être rempli d'un métal, dont le point d'ébullition est supérieur à la température de recuit utilisée pendant la réalisation. Un métal approprié est par exemple du plomb présentant une température de fusion de 327,5°C et une température d'ébullition de 1740°C. Il est également possible d'utiliser de l'étain. L'étain présente une température de fusion de 232°C et une température d'ébullition de 2270°C. Après remplissage du conduit 4 du métal introduit à l'état pulvérulent, les deux extrémités du conducteur central creux 3 sont fermées par des bouchons de fermeture 7, 8. Le diamètre du câble est réduit par les susdites opérations mécaniques alternant avec un traitement thermique. Lors du traitement thermique, le métal est à l'état liquide. Lorsque le câble atteint son diamètre définitif, les bouchons 7, 8 sont elevés. Le câble est porté à une température à laquelle le métal dans le conducteur 3 est liquide. Le métal liquide est enlevé à l'aide d'air comprimé.

Le conduit 4 du conducteur central creux 3 peut également être rempli d'un matériau sujet à sublimation à une température supérieure à la température de recuit utilisée. Des matériaux appropriés sont le chlorure d'ammonium, qui est sujet à sublimation à 340°C et qui permet des recuits jusqu'à 300°C, le fluorure de gallium et le nitrure de gallium, qui se subliment à 800°C et qui permettent des recuits jusqu'à 750°C, le nitrure de germanium et le surflure de germanium, tout comme le sulfure d'indium qui se subliment à 600°C et qui permettent des recuits jusqu'à 550°C. Ces matériaux sont utilisés lorsque le gaine 1 et le conducteur central sont réalisés en cuivre, aluminium ou titane.

Dans l'application de ce dernier procédé, le conduit 4 du conducteur central est donc rempli de l'un de ces matériaux et fermé par les bouchons 7 et 8, après quoi le câble est soumis à divers traitements de façon à en réduire le diamètre dans les rapports requis.

Dès que le diamètre du câble est réduit à la valeur requise, les bouchons 7 et 8 sont enlevés et la câble est porté à la température de sublimation du matériau choisi, de sorte que le matériau peut être sorti du conducteur 3.

L'avantage principal procuré par l'utilisation d'un conducteur central creux consiste en l'élimination de gaz indésirables.

Un avantage additionnel est obtenu si le câble est utilisé pour la connexion électrique des capteurs nucléaires placés dans une atmosphère spéciale comme de l'hélium

$$3 \; (\frac{3}{2} \; He)$$

ou des mélanges d'argon et d'azote. L'utilisation du câble conforme à l'invention permet d'introduire ces gaz après l'installation du capteur.

De plus, la pression de l'atmosphère gazeuse peut être réglée et l'atmosphère gazeuse peut être modifiée à tout moment désiré.

La figure 1c montre un câble blindé obtenu conformément à la présente invention muni de trois conducteurs centraux. Si le câble blindé présente plusieurs conducteurs centraux, soit un, soit tous les conducteurs peut/peuvent présenter une cavité central suivant l'application.

Il est évident que de nombreuses variantes, tant en ce qui concerne la forme que les dimensions du câble conformes à l'invention.

**Revendications**

1. Procédé de réalisation d'un câble blindé à isolant minéral, ce câble comprenant une gaine métallique cylindrique et un ou plusieurs conducteurs centraux de forme tubulaire, isolé(s) de la gaine par l'isolant minéral et les extrémités du câble étant fermées d'une façon étanche tout en laissant passer le(s) conducteur(s), ce procédé incluant les étapes de:

a) mise en place dans la gaine des conducteurs tubulaires et de l'isolant minéral, cet ensemble présentant des dimensions radiales 1 à 10 fois supérieures à celles du câble et de ses éléments terminés;

b) emplissage des conducteurs tubulaires au moyen d'un matériau à l'état pulvérulent dont les propriétés mécaniques leur permettent de résister aux traitements mécaniques à des températures et pressions élevées nécessaires à la fabrication du câble;

c) traitement mécanique incluant le tréfilage ou le martelage du câble, alterné avec des recuits à température élevée T et des trempes, jusqu'à l'obtention des dimensions radiales recherchées pour le câble, ce procédé étant caractérisé en ce que le matériau d'emplissage des conducteurs tubulaires est durant les traitements mécaniques de fabrication du câble, en un état choisi parmi l'état solide ou l'état liquide, les extrémités des conducteurs étant dans ce dernier cas obstruées durant les traitements mécaniques, et en ce que le matériau d'emplissage des conducteurs est en outre choisi parmi les matériaux qui présentent les propriétés physiques appropriées pour permettre à la suite de l'étape c), l'étape;

d) après libération éventuelle des extrémités des conducteurs et élimination du matériau d'emplissage, sur toute la longueur des conducteurs par une opération choisie en fonction de ce matériau parmi le lavage, la dissolution, la fusion, la sublimation à une température supérieure à T.

2. Procédé selon la revendication 1, caractérisé en ce que la température T étant de l'ordre de 1000°C, le matériau choisi pour l'emplissage des conducteurs est le métasilicate de sodium solide durant les traitements mécaniques et en ce que l'étape d) est réalisée par dissolution.

3. Procédé selon la revendication 1, caractérisé en ce que le matériau d'emplissage des conducteurs est un métal dont la température de fusion est inférieure à T, dont la température d'ébullition est supérieure à T, ce métal étant donc liquide durant les traitements mécaniques et en ce que l'étape d) est réalisée par fusion.

4. Procédé selon la revendication 3, caractérisé en ce que le matériau d'emplissage est choisi parmi l'étain ou le plomb.

5. Procédé selon la revendication 1, caractérisé en ce que le matériau d'emplissage des conducteurs est choisi parmi le chlorure d'amonium, le fluorure de gallium, le nitrure de gallium, le nitrure de germanium, le sulfure de germanium, le sulfure d'indium, en ce que les recuits sont pratiqués à des températures T inférieures à leur température de sublimation et en ce que l'étape d) est réalisée par sublimation.

6. Procédé conforme à l'une des revendications 1 à 5, caractérisé en ce que le(s) conducteur(s) est(sont) creux sur toute sa (leur) longueur et que cette cavité est apte à servir de voie pour le passage d'un élément présent à une des extrémités du câble vers l'autre extrémité du câble.

7. Procédé selon la revendication 6, caractérisé en ce que sa longueur est supérieure ou égale à 10 m et en ce que le diamètre du (des) conducteur(s) central (centraux) est inférieur ou égal à 3 mm.

## Patentansprüche

1. Verfahren zum Herstellen eines abgeschirmten Kabels mit mineralischer Isolierung, wobei dieses Kabel einen zylinderförmigen, metallischen Mantel und einen oder mehrere rohrförmige zentrale Leiter aufweist, wobei die Isolierung des Mantels mittels mineralischer Isolierung erfolgt und wobei die Enden des Kabels feuchtdicht abgeschlossen sind und der (die) Leiter hindurchgelassen wird (werden), wobei dieses Verfahren die folgenden Verfahrensschritte aufweist:

a) das Anbringen der rohrförmigen Leiter und der mineralen Isolierung in dem Mantel, wobei das Ganze radiale Abmessungen aufweist, die ein- bis zehnmal grösser sind als die des Kabels und dessen abgeschlossener Enden;

b) das Füllen der rohrförmigen Leiter mit Hilfe eines pulverförmigen Materials, dessen mechanische Eigenschaften es ermöglichen, dass die Leiter zur Herstellung des Kabels erforderliche mechanische Bearbeitungen bei hoher Temperatur und bei hohem Druck bestehen können;

c) eine mechanische Behandlung, worunter des Ziehen oder Hämmern des Kabels, abgewechselt mit Ausglühen bei hoher Temperatur T und Härten bis die für das Kabel erwünschten radialen Abmnessungen erhalten worden sind, wobei dieses Verfahren das Kennzeichen aufweist, dass das Füllmaterial der rohrförmigen Leiter während der mechanischen Behandlungen zum Herstellen des Kabels sich in einem Zustand befindet, der zwischen dem festen und dem flüssigen Zustand gewählt worden ist, wobei die Enden der Leiter in diesem letzteren Fall während der mechanischen Behandlungen abgeschlossen werden und dass das Füllmaterial der Leiter ausserdem gewählt wird aus den Materialien, welche die geeigneten physikalischen Eigenschaften aufweisen um nach dem Schritt c) den folgenden Schritt zu ermöglichen;

d) nach dem etwaigen Ferimachen der Enden der Leiter das Entfernen des Füllmaterials über die ganze Länge der Leiter mittels einer Bearbeitung, die abhängig von diesem Mateial, gewählt wurde aus einem Waschvorgang, einem Lösungsvorgang, einem Schmelzvorgang oder einem Sublimationsvorgang bei einer Temperatur, die höher ist als T.

2. Verfahren nach Anspruch 1, dadurch gekennzeichnet, dass die Temperatur T in der Grössenordnung von 1000°C liegt; das zum Füllen der Leiter gewählte Material Natriummetasilikat ist, das während der mechanischen Bearbeitungen eine feste Forme aufweist und dass der Verfahrensschritt d) durch einen Lösungsvorgang durchgeführt wird.

3. Verfahren nach Anspruch 1, dadurch gekennzeichnet, dass das Füllmaterial der Leiter ein Metall ist, dessen Schmelztemperatur niedriger ist als T, dessen Siedetemperatur höher ist als T, wobei dieses Metall als während mechanischer Bearbeitungen flüssig ist und dass der Verfahrensschritt d) durch einen Sehmelzvorgang durchgeführt wird.

4. Verfahren nach Anspruch 3, dadurch gekennzeichnet, dass das Füllmaterial aus Zinn oder Blei gewählt wird.

5. Verfahren nach Anspruch 1, dadurch gekennzeichnet, dass das Füllmaterial der Leiter aus Ammoniumchlorid, Galliumchlorid, Galliumnitrid, Germaniumnitrid, Germaniumsulfid, Indiumsulfid gewählt worden ist, dass das Glühen bei Temperaturen T durchgeführt wird, die niedriger sind als die Sublimationstemperatur und dass der Verfahrensschritt d) durch einen Sublimationsvorgang durch geführt wird.

6. Verfahren nach einem der Ansprüche 1 bis 5, dadurch gekennzeichnet, dass der (die) Leiter über die ganze Länge hohl ist (sind) und dass dieser Hohlraum als Weg für die Durchgabe eines an einem der Enden des Kabels vorhandenen Elementes zum anderen Ende wirksam sein kan.

7. Verfahren nach Anspruch 5, dadurch gekennzeichnet, dass die Länge des Kabels grösser ist als oder gleich 10 m beträgt und dass der Durchmesser des (der) hohlen zentralen Leiters bzw. Leiter kleiner ist als oder gleich 3 mm begrägt.

## Claims

1. A method of manufacturing a shielded cable having a mineral insulation, which cable comprises a cylindrical metal sheath and one or more tubular central conductors which is/are insulated from the sheath by the insulation material, the ends of the cable being sealed in a tight manner, and so as to allow passage of the conductor(s); this method includes the following stages:

a) positioning the tubular conductors and the mineral insulation in the sheath, the assembly having radial dimensions which are 1 to 10 times larger than those of the cable and its finished components;

b) filling the tubular conductors with a powdered material whose mechanical properties are such that the conductors are resistant to the mechanical treatments at high temperatures and high pressures, which are necessary to manufacture the cable;

c) a mechanical treatment including the drawing or the hammering of the cable, alternated with annealing operations at an elevated temperature T and hardening operations, until the desired radial dimensions for the cable are obtained;

d) uncovering, if required, the ends of the conductors and removing the filling material throughout the length of the conductors by a process which corresponds to the material, such as washing, dissolving, melting, sublimating at a temperature exceeding T.

2. A method as claimed in Claim 1, characterized in that the temperature T is of the order of 1000°C, the material selected to fill the conductors during the mechanical treatments is solid sodium metasilicate, and in that stage d) is carried out by dissolution.

3. A method as claimed in Claim 1, characterized in that the filling material of the conductors is a metal having a melting point below T and a boiling point above T, consequently, this metal is fluid during the mechanical treatments, and in that stage d) is carried out by melting.

4. A method as claimed in Claim 3, characterized in that the filling material used is tin or lead.

5. A method as claimed in Claim 1, characterized in that the filling material of the conductors is selected from ammonium chloride, gallium fluoride, gallium nitride, germanium nitride, germanium sulphide, indium sulphide, and in that annealing is carried out at temperatures T which are below their respective sublimation temperatures, and in that stage d) is carried out by sublimation.

6. A method as claimed in any one of the Claims 1 to 5, characterized in that the conductor(s) is (are) hollow throughout its (their) length, and this cavity can suitably be used to pass a component from one end of the cable to the other end of the cable.

7. A method as claimed in Claim 6, characterized in that the length of the cable exceeds or is equal to 10 m, and in that the diameter of the central conductor(s) is less than or equal to 3 mm.

FIG.1a

FIG.1b

FIG.1c

FIG.2a

FIG.2b